(19) Europäisches Patentamt
European Patent Office
Office européen des brevets

(11) **EP 1 352 186 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(21) Anmeldenummer: **02700144.5**

(22) Anmeldetag: **09.01.2002**

(51) Int Cl.⁷: **F16H 61/02**
// (F16H59/52, 59:66)

(86) Internationale Anmeldenummer:
**PCT/DE2002/000041**

(87) Internationale Veröffentlichungsnummer:
**WO 2002/055909 (18.07.2002 Gazette 2002/29)**

(54) **VERFAHREN ZUM STEUERN EINES KRAFTFAHRZEUGGETRIEBES**

METHOD FOR CONTROLLING THE GEARBOX OF A MOTOR VEHICLE

PROCEDE DE COMMANDE D'UNE BOITE DE VITESSES DE VEHICULE AUTOMOBILE

(84) Benannte Vertragsstaaten:
**DE FR**

(30) Priorität: **16.01.2001 DE 10101758**

(43) Veröffentlichungstag der Anmeldung:
**15.10.2003 Patentblatt 2003/42**

(73) Patentinhaber: **SIEMENS AKTIENGESELLSCHAFT**
**80333 München (DE)**

(72) Erfinder: **GRAF, Friedrich**
**93161 Sinzing (DE)**

(56) Entgegenhaltungen:
**EP-A- 0 576 703       EP-B- 0 766 024**
**US-A- 5 434 780       US-A- 5 510 982**

• **PATENT ABSTRACTS OF JAPAN vol. 2000, no. 06, 22. September 2000 (2000-09-22) & JP 2000 065201 A (HONDA MOTOR CO LTD), 3. März 2000 (2000-03-03)**

**Beschreibung**

Die Erfindung betrifft ein Verfahren zum Steuern eines Kraftfahrzeuggetriebes nach dem Oberbegriff von Patentanspruch 1.

Ein Verfahren mit den Merkmalen des Oberbegriffes des Anspruchs 1 ist aus der EP 0 766 024 B1 bekannt.

Bei einem bekannten derartigen Getriebesteuerungs-Verfahren werden die Getriebegänge in Abhängigkeit zumindest von der Fahrpedalstellung und der Fahrzeuggeschwindigkeit anhand von abgespeicherten Schaltkennfeldern automatisch geschaltet (EP 0 576 703 B1). Durch einen Fuzzy-Logik-Regler werden verschiedene, Fahrzustände und den Lastzustand des Kraftfahrzeugs charakterisierende Signale ausgewertet und daraufhin Steuersignale erzeugt, durch die eine Umschaltung auf ein entsprechendes Schaltkennfeld bewirkt wird. Die Lasterkennung korreliert dabei mit der Momentenbilanz am Getriebeausgang. Durch berechnen eines Differenzmoments am Getriebeausgang lassen sich dadurch erhöhte Fahrwiderstände abweichend von einer angenommenen Fahrzeuggrundbeladung oder dem Fahren in ebenem Gelände unterscheiden.

Bei Abweichungen von mindestens einer der Annahmen wird die gleiche Funktion zugeordnet, nämlich das Verschieben der Schaltpunkte hin zu höheren Geschwindigkeiten um ein sogenanntes Schaltpendeln zu vermeiden. Dabei werden Schaltkennlinien umgeschaltet oder verschoben hin zu höheren Fahrzeuggeschwindigkeiten. Eine derartige Gleichbehandlung von Fahren mit erhöhter Beladung und Befahren einer Steigung ist aber nicht immer wünschenswert. So führt ein solches Verschieben der Schaltlinie auch zu höherem Kraftstoffverbrauch, da die Hochschaltung beispielsweise erst bei höheren Motordrehzahlen erfolgt. Andererseits ist es durchaus möglich Schaltpendeln beim Beschleunigung mit erhöhter Beladung auch bei Verwendung von verbrauchsoptimalen Schaltkennlinien zu vermeiden.

Der Erfindung liegt daher die Aufgabe zugrunde, eine Steuerung für ein Kraftfahrzeuggetriebe zu schaffen, durch die eine verbesserte Anpassung von Schaltkennfeldern an den Lastzustand des Kraftfahrzeugs gewährleistet ist.

Diese Aufgabe wird durch eine Getriebesteuerung mit den Merkmalen des Patentanspruchs 1 gelöst. Vorteilhafte Weiterbildungen der Erfindung sind in den Unteransprüchen niedergelegt.

Verschiedene, die aktuelle Fahrsituation des Kraftfahrzeugs charakterisierende Signale werden ausgewertet und daraus die aktuelle Fahrsituation charakterisierende Stellsignale für die Auswahl eines Schaltkennfeldes erzeugt. Abhängig von den Stellsignalen wird eine Umschaltung auf ein entsprechendes Schaltkennfeld oder ein Verschieben eines Schaltkennfeldes bewirkt. Die Getriebegänge werden dann anhand des gewählten Schaltkennfeldes automatisch geschaltet. Erfindungsgemäß werden auch Signale ausgewertet, die die aktuelle Fahrbahnsteigung charakterisieren. Abhängig von diesen die aktuelle Fahrbahnsteigung charakterisierenden Signalen werden einerseits Stellsignale erzeugt, die die aktuelle Fahrzeugbeladung unabhängig von der aktuellen Fahrbahnsteigung und dem aktuellen Luftwiderstand charakterisieren und andererseits Stellsignale, die die aktuelle Fahrbahnsteigung und den aktuellen Luftwiderstand unabhängig von der aktuellen Fahrzeugbeladung charakterisieren.

Eine derartige Differenzierung von Lastzuständen des Kraftfahrzeugs bietet die Möglichkeit, bei der Auswahl eines Schaltkennfeldes eine zusätzliche Fahrzeugbeladung anders zu bewerten als ein Befahren einer Steigung oder ein Auftreten eines erhöhten Luftwiderstandes auf Grund von Gegenwind oder auf Grund zusätzlicher Aufbauten am Kraftfahrzeug.

Ein Ausführungsbeispiel der Erfindung wird im folgenden anhand der Figuren erläutert. Es zeigen:

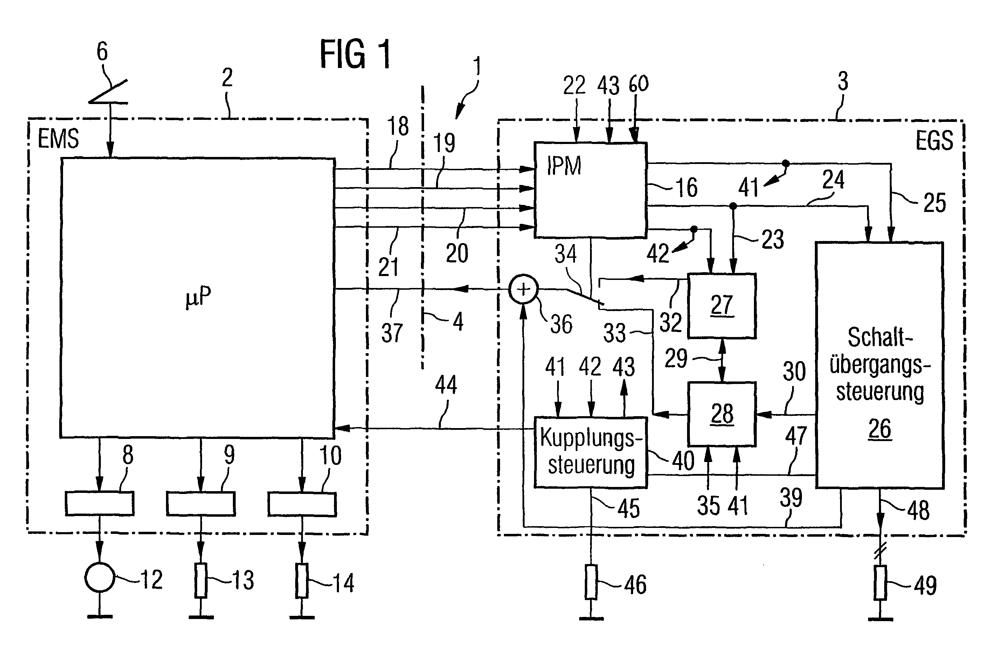

Figur 1 ein Blockschaltbild einer Antriebsstrangsteuerung

Figur 2 ein Blockschaltbild einer IPM-Steuerung und

Figur 3 ein Schaltkennlinienfeld für einen Beschleunigungsvorgang mit erhöhter Fahrzeugbeladung.

Eine schematisch dargestellte Antriebsstrangsteuerung 1 eines Kraftfahrzeugs enthält eine elektronische Motorsteuerung (EMS) 2 und eine elektronische Getriebesteuerung (EGS) 3, die untereinander über eine Schnittstelle 4 kommunizieren, indem sie Daten über Betriebsgrößen des Kraftfahrzeugs und Steuersignale, insbesondere in Form von physikalischen Beschreibungsgrößen untereinander austauschen. Die Motorsteuerung 2 empfängt Signale von einem Fahrpedal 6 und sie weist drei Steuersignalausgaben auf: Eine Signalausgabe 8 für die Drosselklappe, eine Signalausgabe 9 für die Kraftstoffeinspritzung und eine Signalausgabe 10 zum Steuern des Zündwinkels eines hier nicht weiter dargestellten Motors eines Kraftfahrzeugs. Über die Signalausgabe 8 wird ein die Drosselklappe des Kraftfahrzeugs betätigender Elektromotor 12 gesteuert. Über die Signalausgaben 9 und 10 werden Aktoren 13 bzw. 14, die z. B. als piezoelektrische oder induktive Aktoren ausgeführt sind, gesteuert, die die einzuspritzende Kraftstoffmenge und den Zündwinkel des Motors einstellen.

Die Getriebesteuerung 3 enthält folgende Bestandteile: eine Schaltsteuerung oder IPM-Steuerung 16, die ein integriertes, d. h. gesamtheitliches Steuern des Antriebsstrangs durchführt. (IPM steht für Integrated Powertrain Management) und insbesondere die Schaltstrategie festgelegt. Sie erhält über Leitungen 18, 19 und 20 von der Motorsteuerung 2 Daten über verschiedene Werte des Motordrehmoments (auch: Motormoments). Über eine Leitung 21 erhält sie eine Information über das von dem Fahrer des Kraftfahrzeugs vorgegebene Motorsollmoment oder aber über die Stellung des Fahrpedals 6.

Über eine Leitung 22 empfängt die IPM-Steuerung 16 die jeweilige Abtriebsdrehzahl des Getriebes, die der Raddrehzahl und damit - in einem vorgegebenen Verhältnis - der Geschwindigkeit des Kraftfahrzeugs entspricht. Über eine Leitung 60 empfängt die IPM-Steuerung 16 eine Information über die aktuelle Fahrbahnsteigung, zum Beispiel von einem Navigationssystem. Über eine sich verzweigende Signalleitung 23, 24 sendet die IPM-Steuerung 16 einen einzustellenden Zielgang oder eine Zielübersetzung an eine Schaltübergangssteuerung 26 und an eine erste Entscheidungsschaltung 27 sowie an eine zweite Entscheidungsschaltung 28. Diese beiden Entscheidungsschaltungen 27 und 28 sind durch eine bidirektionale Leitung 29 miteinander verbunden.

Alle relevanten Informationen über die Fahrstrategie und die jeweilige Fahrsituation gelangen über eine Leitung 25 an die Schaltübergangssteuerung 26. Diese sendet an die zweite Entscheidungsschaltung 28 über eine Leitung 30 Steuersignale, mit denen z. B. die zeitliche Ableitung des Motordrehmoments, d. h. die Geschwindigkeit, mit der das Motordrehmoment herabgefahren wird, gesteuert wird.

Je ein Signalausgang der ersten und der zweiten Entscheidungsschaltung 27, 28 sind über Signalleitungen 32 bzw. 33 mit Anschlüssen eines Schalters 34 verbunden. Der von der IPM-Steuerung 16 gesteuerte Schalter 34 verbindet entweder den Ausgang der ersten Entscheidungsschaltung 27 oder den Ausgang der zweiten Entscheidungsschaltung 28 mit einem Addierer 36, dessen Ausgang über eine Leitung 37 mit der Motorsteuerung 2, d. h. insbesondere mit einem Mikroprozessor 38 der Motorsteuerung, verbunden ist. Über die Leitung 37 teilt die Getriebesteuerung 3 der Motorsteuerung 2 das angeforderte Motordrehmoment mit. Über eine Leitung 35 wird an die zweite Entscheidungsschaltung 28 ein Zeittakt gelegt, mit dem das Steuern der Getriebesteuerung 3 von dem Steuern der Motorsteuerung 2 getrennt werden kann. Eine Leitung 39 verbindet einen Ausgang der Schaltübergangssteuerung 26 mit einem Eingang des Addierers 36.

Am anderen Eingang des Addierers 36 liegt das von dem Fahrer angeforderte Motordrehmoment an. Dieses sogenannte Fahrerwunschmoment wird außerhalb einer Schaltung, d. h. eines Schaltvorgangs, von der IPM-Steuerung 16 korrigiert. Während einer Schaltung wird es von der Schaltübergangssteuerung 26 korrigiert. Der Schalter 34 unterscheidet somit zwischen der Steuerung außerhalb eines Schaltvorganges und der Steuerung innerhalb oder während eines Schaltvorganges.

Eine Kupplungssteuerung 40 empfängt von der IPM-Steuerung 16 über eine von der Leitung 25 abzweigende Leitung 41 alle relevanten Informationen über die Fahrstrategie und die jeweilige Fahrsituation und über eine Leitung 42 eine Information über die Zielposition der Kupplung und das übertragene Motordrehmoment. Über die Leitung 60 empfängt die Kupplungssteuerung 40 auch eine Information über die aktuelle Fahrbahnsteigung. Die Kupplungssteuerung 40 sendet ihrerseits über eine Leitung 43 ein Ausgangssignal an die IPM-Steuerung 16. Über eine Ausgangsleitung 44 übermittelt sie die tatsächliche Kupplungsposition an die Motorsteuerung 2.

Die Leitung 41 ist auch an die zweite Entscheidungsschaltung 28 angeschlossen, so dass auch an diese alle relevanten Informationen über die Fahrstrategie und die jeweilige Fahrsituation gelangen. Der Verlauf der (Signal-) Leitungen 41 und 41 ist in der Zeichnung der besseren Übersichtlichkeit wegen nur angedeutet.

Die Kupplungssteuerung 40 ist durch eine Steuerleitung 45 mit einem Kupplungsaktuator oder Kupplungsaktor 46 verbunden, der die - hier nicht dargestellte - Kupplung des Antriebsstrangs 1 steuert. Über eine Leitung 47, die die Schaltübergangssteuerung 26 mit der Kupplungssteuerung 40 verbindet, wird das Steuern der Kupplung mit dem Schaltvorgang koordiniert.

Die Schaltübergangssteuerung 26 ist durch mehrere Steuerleitungen 48, die hier als eine Mehrfachleitung dargestellt sind, mit elektromechanischen oder Elektrohydraulischen Getriebeaktuatoren oder Getriebeaktoren 49 verbunden, die die Gangwechsel in den, hier ebenfalls nicht dargestellten, Getriebe durchführen, indem Sie in bekannter Weise Schaltgabeln des Getriebes betätigen. Diese Getriebeaktuatoren setzen dabei die Steuerbefehle in Längs- und Drehbewegungen der Schaltgabeln um. Eine Drehbewegung dient der Gassenwahl, eine Längsbewegung dem Einlegen oder Ausrücken eines Getriebegangs.

Die im folgenden beschriebenen Schaltungsblöcke der Getriebesteuerung 3 sind im vorliegenden Ausführungsbeispiel allesamt Bestandteile der IPM-Steuerung 16. Die IPM-Steuerung 16 ist zentraler und wichtigster Teil der Steuerung des Antriebsstrangs, sie koordiniert die Funktion seiner sämtlichen Einzelbestandteile. Sie wird deshalb auch als Meta-Controller bezeichnet. Die IPM-Steuerung 16 ist hier zwar als in der Getriebesteuerung 3 enthalten dargestellt, diese ist aber nicht notwendig. Sie kann auch anderswo, zum Beispiel in der Motorsteuerung 2 untergebracht sein.

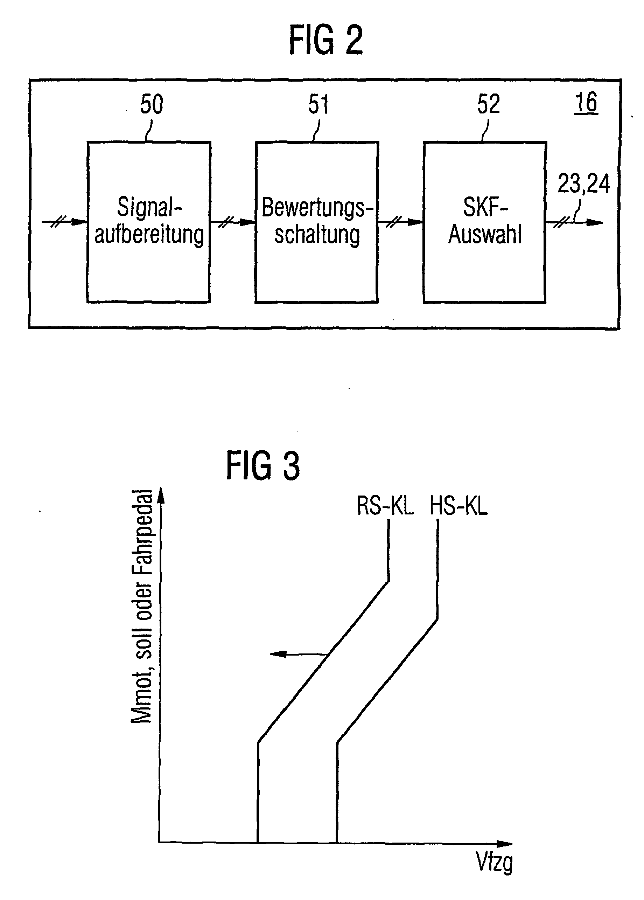

Die IPM-Steuerung 16 ist mit einer Signalaufbereitungsschaltung (kurz: Signalaufbereitung) 50 versehen (Figur 2). In der Signalaufbereitung 50 werden verschiedene, die aktuelle Fahrsituation charakterisierende Signale, insbesondere auch die über die Leitung 60 zugeführten Informationen über die aktuelle Fahrbahnsteigung, aufbereitet.

Die Informationen über die Fahrbahnsteigung können dabei entweder unmittelbar einen Steigungswinkel $\alpha$ oder die resultierende Steigung $\sin\alpha$ beinhalten. Ebenso kann die Information aber in Form einer Höhenangabe h zur Verfügung gestellt werden, aus der sich die Fahrbahnsteigung berechnen läßt:

$$\sin\alpha = \frac{h2-h1}{s} \tag{1}$$

Dabei ist s die Wegstrecke, die ausgehend von der Höhe h1 bis zum Erreichen der Höhe h2 zurückgelegt wurde.

Die Höhen oder Steigungsinformation kann dabei von einem Navigationssystem oder auch über einen Funkkanal - GPS oder UMTS - zur Verfügung gestellt werden. Auch der Einsatz eines Neigungssensors oder eines barometrischen Höhenmessers, wie er häufig bei Fahrradcomputern Verwendung findet, ist möglich.

Die Eingangssignale der Signalaufbereitung 50 - diese können von Sensoren, anderen Steuergeräten oder aus sonstigen Informationsquellen stammen - werden in weiter verarbeitbare Größen gewandelt und es werden auch aus den Signalen abgeleitete Größen berechnet.

Die ausgewerteten Signale werden einer Bewertungsschaltung 51, die vorzugsweise als Fuzzy-System ausgebildet ist, zugeführt und dort bewertet oder auch miteinander verknüpft. Abhängig von der Bewertung werden Stellsignale erzeugt, die einer Schaltkennfeld-Auswahlschaltung (kurz: SKF-Auswahl) 52 zugeführt werden. In der SKF-Auswahl 52 wird schließlich abhängig von den Stellsignalen ein entsprechendes Schaltkennfeld ausgewählt. Dabei kann entweder auf ein anderes Kennfeld umgeschaltet werden oder ein bestehendes Kennfeld verschoben werden.

Entscheidend für eine individuelle Optimierung der Antriebsstrangsteuerung 1 nach den in der jeweiligen Betriebssituation maßgeblichen Kriterien ist eine sichere Erkennung der aktuellen Fahrsituation oder Fahrmanöver. Durch die Fahrsituationserkennung innerhalb der adaptiven Schaltstrategie, die von der IPM-Steuerung 16 realisiert wird, ist es möglich, Fahrleistungsanforderungen nicht nur in ihrer Intensität, sondern auch in ihrem dynamischen Anspruch zu klassifizieren.

Bei einer herkömmlichen Antriebsstrangsteuerung, wie sie beispielsweise in der eingangs erwähnten EP 0 576 703 B1 beschrieben ist, wird in der Signalaufbereitung 50 ein Differenzmoment $t_{q\_dif}$ berechnet, auf Grund dessen ein Auftreten eines erhöhten Fahrwiderstands erkannt wird. Das Differenzmoment $t_{q\_dif}$ wird dabei folgendermaßen berechnet:

$$t_{q\_dif} = t_{q\_eng}*i_{tr}*i_a - t_{q\_drg} - J*\frac{dnab}{dt} \tag{2}$$

mit

$t_{q\_eng}$: von Kupplung übertragenes Antriebsmoment
$i_{tr}$: Getriebeübersetzung
$i_a$: Achsübersetzung
$t_{q\_drg}$: Rollwiderstand
$J$: nominale Fahrzeugträgheit
$\frac{dnab}{dt}$: Beschleunigung Abtriebsdrehzahl

Alternativ zum Differenzmoment kann auch eine damit korrespondierend Größe, wie zum Beispiel eine Differenzkraft entsprechend der Beschreibung in EP 0 576 703 B1, berechnet werden. Gleichung (2) stellt die Momentenbilanz am Getriebeabtrieb dar und dient zum Erkennen eines im Vergleich zur Fahrt mit einer angenommenen Fahrzeuggrundbeladung - in der Regel Minimalbeladung, halb voller Tank und ein Fahrer - und Fahren auf ebener Strecke erhöhten Fahrwiderstands.

Um zwischen den Lastfällen "zusätzliche Beladung" und "Fahrbahnsteigung" unterscheiden zu können, ist eine Differenzierung bezüglich des Differenzmoments notwendig.

Eine erstes Differenzmoment $t_{q\_dif\_rd}$ beschreibt alle zusätzlichen Fahrwiderstände bzw. Lastmomente am Getriebeabtrieb, die unabhängig von einer möglichen Zusatzbeladung auftreten. Dabei werden sowohl Einwirkungen der Fahrbahnsteigung als auch der Fahrbahnbeschaffenheit oder eventuellen Gegenwindes berücksichtigt. Ebenso werden auf diese Weise auch veränderte Luftwiderstands-Werte (cw-Werte), zum Beispiel hervorgerufen durch zusätzliche Aufbauten, berücksichtigt. Das erste Differenzmoment $t_{q\_dif\_rd}$ berechnet sich dabei wie folgt:

$$t_{q\_dif\_rd} = t_{q\_eng}*i_{tr}*i_a - t_{q\_drg} - k*m_{real}*\frac{dnab}{dt} \tag{3}$$

mit

$m_{real}$: aktuelle Fahrzeugmasse, Gesamtmasse

Zur Berechnung des ersten Differenzmoments $t_{q\_dif\_rd}$ muss folglich die aktuelle Fahrzeugmasse bekannt sein. Zur Bestimmung der Fahrzeugmasse wird zunächst das erste Differenzmoment $t_{q\_dif\_rd}$ angenähert gemäß

$$t_{q\_dif\_rd} = k*g*m_{real}*\sin\alpha \qquad (4)$$

mit

g: Erdbeschleunigung

$\sin\alpha$: Fahrbahnsteigung

gesetzt. Dieser Term entspricht dann dem Steigungswiderstand, also demjenigen Teil des erhöhten Fahrwiderstands oder Zusatzmoments, der/das nur auf eine Steigung der Fahrbahn zurückzuführen ist.

Wird Gleichung (4) in Gleichung (3) eingesetzt und der Term nach $m_{real}$ aufgelöst, so ergibt sich für die Berechnung von $m_{real}$:

$$m_{real} = (t_{q\_eng}*i_{tr}*i_a - t_{q\_drg}) \, / \, (k*\frac{dnab}{dt} + k*g*\sin\alpha) \qquad (5)$$

Da der Signalaufbereitung 50 erfindungsgemäß über die Leitung 60 eine Information über die Fahrbahnsteigung zugeführt wird, ist die Fahrzeugmasse bestimmbar und somit das erste Differenzmoment $t_{q\_dif\_rd}$ berechenbar. Die Fahrzeugmasse $m_{real}$ kann laufend oder jeweils zu Beginn eines Fahrzyklus, also bei erstmaliger Inbetriebnahme nach einem Abstellen des Kraftfahrzeugs ermittelt werden.

Analog zum ersten Differenzmoment $t_{q\_dif\_rd}$ ergibt sich ein zweites Differenzmoment $t_{q\_dif\_wgt}$, das den ausschließlich von einer zusätzlichen Fahrzeugbeladung bewirkten zusätzlichen Fahrwiderstand wiedergibt, zu

$$t_{q\_dif\_wgt} = k* (M_{real} - m_{nom}) * (\frac{dnab}{dt} + g*\sin\alpha) \qquad (6)$$

mit

$m_{nom}$: Nominalmasse bei Fahrzeuggrundbeladung

Auch diese Größe ist bei bekannter Fahrbahnsteigung und damit bestimmbarer Fahrzeugmasse zu berechnen.

Eine Gleichbehandlung der Fahrsituationen "erhöhte Fahrzeugbeladung" und "Befahren einer Steigung" oder "Fahren bei Gegenwind" oder "Fahren bei erhöhtem cw-Wert", wie sie durch eine Berechnung eines Gesamt-Diferenzmoments nach Gleichung (1) zwangsläufig auftritt, ist nicht immer wünschenswert. Wird bei Berechnung des Gesamt-Differenzmoments nach Gleichung (1) ein erhöhter Fahrwiderstand erkannt, so werden Schaltkennlinien derart verschoben, dass eine Hochschaltung erst bei höheren Motordrehzahlen erfolgt. Das führt aber zwangsläufig zu einer Erhöhung des Kraftstoffverbrauchs, obwohl bei Beschleunigungsvorgängen mit erhöhter Fahrzeugbeladung ein Schaltpendeln auch ohne Verschieben der Hochschaltkennlinie durch ein Verschieben der Rückschaltkennlinien hin zu kleineren Fahrzeuggeschwindigkeiten zu vermeiden wäre (Figur 3). Auf diese Weise wird der Kraftstoffverbrauch nicht erhöht, es wird aber dennoch eine ausreichende Hysterese zwischen Hochschalt- und Rückschaltkennlinie zur Vermeidung von Schaltpendeln hergestellt. Dabei ist auch zu berücksichtigen, dass Beschleunigungsvorgänge mit erhöhter Fahrzeugbeladung im Gegensatz zum Befahren einer Steigung vergleichsweise kurz sind. Benötigt der Fahrer beim Beschleunigen mit erhöhter Fahrzeugbeladung dennoch mehr Fahrleistung - mittels Verschieben der Hochschaltkennlinie hin zu höheren Fahrzeuggeschwindigkeiten - so kann dies über eine Fahrerklassifikation, wie sie auch in der EP 0 576 703 B1 beschrieben ist, realisiert werden.

Um eine derartige Differenzierung der Belastungsfälle eines Kraftfahrzeugs zu ermöglichen werden die beiden Differenzmomente $t_{q\_dif\_rd}$ und $t_{q\_dif\_wgt}$ unterschiedlich verarbeitet. In einer bevorzugten Ausführungsform wird hierzu, wie bereits erwähnt eine Bewertungsschaltung 51 in Form eines Fuzzy-Systems eingesetzt. Innerhalb des Fuzzy-Systems können auch weitere Fahrzeugparameter, wie Fahrzeuggeschwindigkeit, Fahrstil oder ähnliches mit den Differenzmomenten $t_{q\_dif\_rd}$ und/oder $t_{q\_dif\_wgt}$ verknüpft werden und auf diese Weise eine unterschiedliche Intensität der Schaltkennlinienverschiebung durch die SKF-Auswahl 52 zu bewirken. Alternativ zum Verschieben einer Schaltkennlinie kann selbstverständlich auch eine geeignete andere Schaltkennlinie ausgewählt werden.

Die Informationen über die aktuelle Fahrbahnsteigung können der Bewertungsschaltung 51 auch unmittelbar zur Verfügung gestellt werden. Auf diese Weise kann auch ein anhaltender Bremsvorgang bei Bergabfahrt erkannt werden und die Bremswirkung durch eine Getrieberückschaltung unterstützt werden.

Wird die Information über die aktuelle Fahrbahnsteigung der IPM-Steuerung 16 und der Kupplungssteuerung 40 über ein Navigationssystem oder einen Funkkanal zugeführt, hat das den Vorteil, dass die Information auch im Fahrzeugstillstand, selbst nach Abstellen des Kraftfahrzeugs zur Verfügung steht. Damit ist es auch möglich, bei einem mehrstufigen Getriebe den für einen bevorstehenden Anfahrvorgang optimalen Gang einzulegen. So wird zum Beispiel beim Anfahren am Berg unbedingt der erste Gang benötigt, wohingegen in der Ebene der zweite Gang ausreichend ist. Ebenso kann auch die Kupplung optimal gesteuert werden, um beispielsweise die Schlupfphase und damit den Verschleiß zu minimieren.

**Patentansprüche**

1. Verfahren zum Steuern eines Kraftfahrzeuggetriebes, bei dem

   - verschiedene, die aktuelle Fahrsituation des Kraftfahrzeugs charakterisierende Signale ausgewertet und daraus die aktuelle Fahrsituation charakterisierende Stellsignale für die Auswahl eines Schaltkennfeldes erzeugt werden,
   - abhängig von den Stellsignalen eine Umschaltung auf ein entsprechendes Schaltkennfeld oder ein Verschieben eines Schaltkennfeldes bewirkt wird,
   - die Getriebegänge anhand des gewählten Schaltkennfeldes automatisch geschaltet werden,
   - auch Signale ausgewertet werden, die die aktuelle Fahrbahnsteigung charakterisieren,

   **dadurch gekennzeichnet**

   - **dass** abhängig von den die aktuelle Fahrbahnsteigung charakterisierenden Signalen Stellsignale $t_{q\_dif\_wgt}$ erzeugt werden, die ausschließlich einen von einer zusätzlichen Fahrzeugbeladung bewirkten zusätzlichen Fahrwiderstand charakterisieren und
   - **dass** abhängig von den die aktuelle Fahrbahnsteigung charakterisierenden Signalen Stellsignale $t_{q\_dif\_rd}$ erzeugt werden, die einen von einer veränderten Fahrbahnsteigung und einem veränderten. Luftwiderstands-Wert unabhängig von einer möglichen Zusatzbeladung bewirkten zusätzlichen Fahrwiderstand charakterisieren.

2. Verfahren nach Anspruch 1, **dadurch gekennzeichnet, dass** die die aktuelle Fahrbahnsteigung charakterisierenden Signale von einem Navigationssystem oder über einen Funkkanal übertragen werden.

3. Verfahren nach Anspruch 2, **dadurch gekennzeichnet, dass** die die aktuelle Fahrbahnsteigung charakterisierenden Signale auch im Fahrzeugstillstand ausgewertet werden.

4. Verfahren nach einem der vorhergehenden Ansprüche, **dadurch gekennzeichnet, dass** abhängig von den die aktuelle Fahrbahnsteigung charakterisierenden Signalen eine aktuelle Fahrzeugmasse $m_{real}$ bestimmt wird.

5. Verfahren nach Anspruch 4, **dadurch gekennzeichnet, dass** abhängig von der aktuellen Fahrzeugmasse berechnet wird:

   - ein erstes Differenzmoment $t_{q\_dif\_rd}$ oder eine damit korrespondierende Größe, die einen durch die aktuelle Fahrbahnsteigung und den aktuellen Luftwiderstand hervorgerufenen zusätzlichen Fahrwiderstand charakterisiert, und
   - ein zweites Differenzmoment $t_{q\_dif\_wgt}$ oder eine damit korrespondierende Größe, die einen durch die aktuelle Fahrzeugbeladung hervorgerufenen zusätzlichen Fahrwiderstand charakterisiert.

**Claims**

1. Method of controlling the gearbox of a motor vehicle in which

   - various signals **characterizing** the current driving situation of the motor vehicle are evaluated, and from these setting signals **characterizing** the current driving situation for selecting a characteristic gear change field are generated,

- depending on the control signals, there is a change to a corresponding characteristic gear change field or a shift of a gear change field,
- the gears are changed automatically on the basis of the characteristic gear change field selected,
- signals which characterize the current road incline are also interpreted,

   **Characterized in that**,

- depending on the current road incline, setting signals tq_dif_wgt are generated which exclusively characterize an additional driving resistance caused by an additional vehicle loading and
- depending on the signals **characterizing** the current road incline, control signals tq_dif_rd are generated which characterize a value depending on a changed road incline and a changed air resistance value independently of a possible additional loading

2. Method in accordance with Claim 1, with the signals **characterizing** the current road incline being transferred from a navigation system or over a radio channel.

3. Method in accordance with Claim 2, with the signals **characterizing** the current road incline also being evaluated when the vehicle is stationary.

4. Method in accordance with one of the previous claims, with a current vehicle mass $m_{real}$ being determined depending on signals **characterizing** the current road incline.

5. Method in accordance with Claim 4, **characterized in that** the following are calculated depending on the current vehicle mass:

- a first difference moment $t_q$_dif_rd or a value corresponding to it, which characterizes an additional driving resistance created by the current road incline and the current air resistance, and
- a second difference moment $t_q$_dif_wgt or a value corresponding to it, which characterizes an additional driving resistance created by the current vehicle loading.

## Revendications

1. Procédé pour commander une boîte de vitesses d'un véhicule à moteur, dans lequel,

- pour la sélection d'un diagramme caractéristique de changement de vitesses, différents signaux caractérisant la situation actuelle de marche du véhicule à moteur sont évalués et des signaux de commande caractérisant la situation actuelle de marche du véhicule à moteur sont générés en conséquence,
- un changement sur un diagramme caractéristique de changement de vitesses ou un déplacement d'un diagramme caractéristique de changement de vitesses est effectué en fonction des signaux de commande,
- les rapports de la boîte de vitesses sont engagés automatiquement en fonction du diagramme caractéristique de changement de vitesse choisi,
- des signaux sont évalués caractérisant la pente actuelle de la chaussée,

   **caractérisé en ce que**

- des signaux de commande ($t_{q\_dif\_wgt}$) qui **caractérisent** exclusivement une résistance de roulement additionnelle provoquée par une charge supplémentaire du véhicule sont générés en fonction des signaux caractérisant la pente actuelle de la chaussée, et
- des signaux de commande ($t_{q\_dif\_rd}$) qui **caractérisent** une résistance de roulement additionnelle provoquée par une pente de la chaussée et une valeur de résistance de l'air modifiées et indépendamment d'une charge supplémentaire possible, sont générés en fonction des signaux caractérisant la pente actuelle de la chaussée.

2. Procédé selon la revendication 1, **caractérisé en ce que** les signaux caractérisant la pente actuelle de la chaussée sont transmis par un système de navigation ou par un canal radio.

3. Procédé selon la revendication 2, **caractérisé en ce que** les signaux caractérisant la pente actuelle de la chaussée sont également évalués lorsque le véhicule est à l'arrêt.

4. Procédé selon l'une des revendications précédentes, **caractérisé en ce qu'**une masse actuelle de véhicule $m_{real}$ est déterminée en fonction des signaux caractérisant la pente actuelle de la chaussée.

5. Procédé selon la revendication 4, **caractérisé en ce que** les valeurs suivantes sont calculées en fonction de la masse actuelle du véhicule :

- un premier couple différentiel $t_{q\_dif\_rd}$ ou une grandeur y correspondante caractérisant une résistance de marche supplémentaire provoquée par la pente actuelle de la chaussée et la résistance de l'air actuelle, et
- un deuxième couple différentiel $t_{q\_dif\_wgt}$ ou une grandeur y correspondante caractérisant une résistance de marche supplémentaire provoquée par la charge actuelle du véhicule.

# FIG 1

EP 1 352 186 B1

# FIG 2

| 50 | 51 | 52 | 16 |
|---|---|---|---|
| Signal-aufbereitung | Bewertungs-schaltung | SKF-Auswahl | 23,24 |

# FIG 3

Mmot, soll oder Fahrpedal

RS-KL    HS-KL

Vfzg